(19) Europäisches Patentamt

European Patent Office

Office européen des brevets

(11) Veröffentlichungsnummer: **0 326 044 B1**

(12) # EUROPÄISCHE PATENTSCHRIFT

(45) Veröffentlichungstag der Patentschrift: **16.09.92**

(21) Anmeldenummer: **89101016.7**

(22) Anmeldetag: **20.01.89**

(51) Int. Cl.⁵: **B61D 27/00**, B60H 1/00

(54) Einrichtung zur Ausregelung von Luftdruckstössen in Fahrgasträumen von Schienenfahrzeugen.

(30) Priorität: **23.01.88 DE 3801891**

(43) Veröffentlichungstag der Anmeldung:
**02.08.89 Patentblatt 89/31**

(45) Bekanntmachung des Hinweises auf die Patenterteilung:
**16.09.92 Patentblatt 92/38**

(84) Benannte Vertragsstaaten:
**AT CH ES FR GB IT LI NL**

(56) Entgegenhaltungen:
**EP-A- 0 104 547**
**EP-A- 0 143 931**
**DE-A- 2 658 882**
**US-A- 2 753 515**

(73) Patentinhaber: **MAN GHH Schienenverkehrs-technik GmbH**
**Frankenstrasse 150**
**W-8500 Nürnberg 44(DE)**

(72) Erfinder: **Günther, Christian, Dr.**
**Ludwig-Thoma-Strasse 71**
**W-8013 Haar(DE)**

(74) Vertreter: **Merten, Fritz**
**Tristanstrasse 5**
**W-8500 Nürnberg 40(DE)**

**Beschreibung**

Die Erfindung bezieht sich auf eine Einrichtung zur Ausregelung von Luftdruckstößen in Fahrgasträumen von Schienenfahrzeugen gemäß dem Oberbegriff des Patentanspruches 1.

Aus der DE-PS 33 43 487 ist eine solche Einrichtung bekannt, wobei die Luftdruckstöße in den Fahrgasträumen mit Hilfe einer Klimaanlage ausgeregelt werden. Die Klimaanlage weist einen Frischlufteinlaß und zumindest einen Luftauslaß aus dem Fahrgastraum auf, wobei mit Hilfe von Gebläsen, üblicherweise einem Einlaßgebläse mit einem entsprechenden Ventilator ein im wesentlichen konstanter Luftdurchfluß durch den Fahrgastraum aufrechterhalten wird. Hierzu sind Sensoren vorgesehen, die die jeweilige Luftdurchflußmenge messen, z.B. Geschwindigkeitssensoren, die im Frischlufteinlaß angeordnet sind. Diese Sensoren arbeiten mit einem Folgeregler zusammen, dessen Ausgangssignale zur Einstellung einer Blende verwendet werden, die im Lufteinlaß angeordnet ist.

Das Dokument EP-A-0 104 547 zeigt eine Einrichtung, die eine mittels eines Verstellmotors verschwenkbare Durchfließregulierklappe und ein eingebautes von einem Elektromotor mit unterschiedlichen Drehzahlen antreibbares Gebläse aufweist.

Diese bekannten Einrichtungen arbeiten sehr wirkungsvoll. Der konstruktive Aufwand ist jedoch relativ hoch, insbesondere durch die in dem Lufteinlaß angeordnete verstellbare Blende. Für das Verstellen der Blende müssen schnellwirkende Motoren vorgesehen werden, außerdem ist darauf zu achten, daß die Blende während der gesamten Betriebsdauer leichtgängig zu verstellen ist.

Der Erfindung liegt die Aufgabe zugrunde, eine Einrichtung der in Rede stehenden Art konstruktiv zu vereinfachen, ohne daß dadurch die Wirksamkeit beeinträchtigt wird.

Diese Aufgabe ist gemäß der Erfindung durch die im kennzeichnenden Teil des Patentanspruches 1 angegebenen Merkmale gelöst.

Demgemäß wird vorgeschlagen, als einzige Stellmitel zum Ausregeln von Luftdruckstößen und zum Einstellen eines im wesentlichen konstanten Luftdurchflusses die Ventilatoren der Gebläse selbst zu verwenden und deren Drehzahl zu verändern. Die Drehzahl ist auf einfache Weise mit Hilfe von Schützen oder verstellbaren elektrischen Widerständen zu beeinflussen.

Eine solche Maßnahme erfordert nur geringfügigen konstruktiven Aufwand, so daß auch bestehende Klimaanlagen leicht umgerüstet werden können.

Es hat sich herausgestellt, daß über die Drehzahlregelung der Gebläseventilatoren auch kurzzeitig auftretende Luftdruckstöße nicht in den Fahrgastraum weitergeleitet werden, und daß die Veränderung der Drehzahl der Gebläseventilatoren bei auftretenden Luftdruckstößen die Funktionsdauer der Gebläseventilatoren nicht merklich beeinflußt.

Je nachdem, an welchen Stellen innerhalb der Klimaanlagen die Gebläse mit ihren Ventilatoren angeordnet sind, kann eine Regelung der Drehzahl bei Einlaßgebläsen, Auslaßgebläsen oder auch kombiniert durch die Regelung beider Gebläse erfolgen.

Als Sensoren können Druckdifferenzsensoren verwendet werden, deren Sensorcharakteristik an die Empfindlichkeit des menschlichen Ohres angepaßt sind. Als Regler kann ein üblicher Folgeregler entsprechend der obengenannten deutschen Patentschrift verwendet werden.

Weitere Ausgestaltungen der Erfindung gehen aus den Unteransprüchen hervor.

Die Erfindung ist in einem Ausführungsbeispiel anhand der Zeichnung näher erläutert.

In dieser stellen dar:

Fig. 1 ein Blockschaltbild einer Einrichtung gemäß der Erfindung zur Ausregelung von Luftdruckstößen in Fahrgasträumen von Schienenfahrzeugen;

Fig. 2 eine Ausführungsform eines Sensors.

Ein Fahrgastraum 1 eines Schienenfahrzeuges ist mit zumindest einem Lufteinlaß 2 und zumindest einem Luftauslaß 3 verbunden. Die Lufteinlässe und Luftauslässe sind über Luftrohre 4 bzw. 5 mit Gebläsen 6 bzw. 7 verbunden. Das Gebläse 6 ist ein Druckgebläse mit einem Ventilator 8, durch das Frischluft in den Fahrgastraum 1 hineingedrückt wird. Das Gebläse 7 ist ein Sauggebläse mit einem Ventilator 9, durch den die verbrauchte Luft aus dem Fahrgastraum 1 abgezogen wird. Zwischen Lufteinlaß 2 und Luftauslaß 3 soll ein bestimmter Druckgradient mit geringen zeitlichen Schwankungen eingestellt werden, so daß durch den Fahrgastraum 1 eine im wesentlichen konstante Luftmenge pro Zeiteinheit strömt.

Zur Überwachung der Luftdurchflußmenge ist eine Sensoranordnung 10 vorgesehen, die beispielsweise aus mehreren Sensoren im Lufteinlaß 2 und Luftauslaß 3 entsprechend einer Anordnung in der erwähnten Patentschrift 33 43 487 bestehen kann. Mit dieser Sensoranordnung wird der Druckgradient innerhalb des Fahrgastraumes gemessen. Für die Regelung wird entsprechend der genannten Patentschrift als Regelsignal die zeitliche Ableitung $\dot{p}_M$ des Druckes innerhalb des Fahrgastraumes herangezogen und zwei Folgereglern 11 und 12 zugeführt, die den gemessenen Druckgradienten mit einem Sollwert vergleichen. Die Regler 11 und 12 können als herkömmliche Folgeregler ausgebildet sein, die eine Kennlinie mit einem Totzonenbereich um den Sollwert und anschließend linearen Ästen im positiven und im negativen Bereich aufweisen. Durch diese Folgeregler 11 und 12 wird die Drehzahl der Ventilatoren 8 und 9 im Einlaß- bzw. Auslaßgebläse 6 bzw. 7 geregelt. Übersteigt der gemessene Druckgradient den positiven Endwert des Totzonenbereiches, so wird die Drehzahl des Ventilators 8 im Einlaßgebläse 6 entsprechend abgesenkt und diejenige des Ventilators 9 im Auslaßgebläse angehoben. Unterschreitet der gemessene Druckgradient den durch den Totzonenberiech vorgegebenen negativen Wert, so wird die Drehzahl des Einlaßventilators 8 angehoben und diejenige des Auslaßventilators 9 entsprechend abgesenkt.

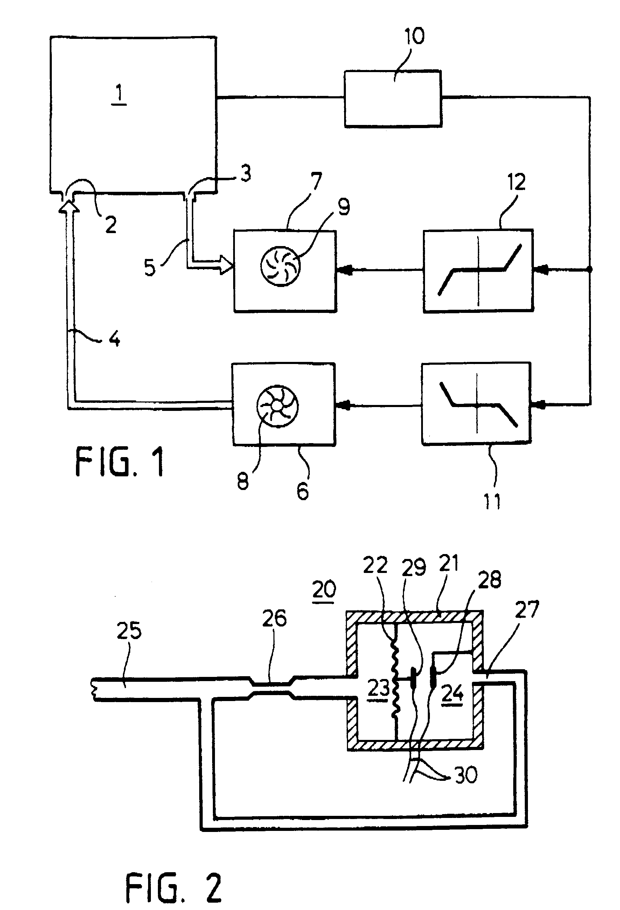

Eine Ausführung eines Sensors 20 der Sensoranordnung 10 zum Messen des Druckgradienten bzw. der zeitlichen Druckänderung ist in Fig.2 dargestellt. Der Sensor 20 weist ein Gehäuse 21 auf, das durch eine Membran 22 in zwei Kammern 23 und 24 unterteilt ist. Mit der eingangsseitigen Kammer 23 ist eine Einlaßleitung 25 verbunden, die eine Drosselstelle 26 aufweist. Mit der Kammer 24 ist eine Auslaßleitung verbunden, die zu der Eingangsleitung 25 vor der Drosselstelle 26 zurückgeführt ist. In der ausgangsseitigen Kammer 24 des Sensors 20 ist eine feststehende Kondensatorplatte 28 vorgesehen, mit der Membran 22 eine mit dieser bewegte zweite Kondensatorplatte 29 verbunden. Zwischen beide Kondensatorplatten 28 und 29 ist eine Spannung angelegt; die durch die Abstandsveränderung zwischen den Kondensatorplatten 28 und 29 hervorgerufenen Spannungsänderungen werden durch Abgriffsleitungen 39 erfaßt. Die Sensorcharakteristik dieses Sensors kann auf die Empfindlichkeit des menschlichen Ohres abgestellt werden. Ebenso sind die Kennlinien der Folgeregler dieser Empfindlichkeit angepaßt, wodurch insbesondere der Totzonenbereich der Regler bestimmt wird.

**Patentansprüche**

1. Einrichtung zur Ausregelung von Luftdruckstößen in Fahrgasträumen (1) von Schienenfahrzeugen, die eine Klimaanlage (6,7,8,9) mit einem Frischlufteinlaß (2) und einem Luftauslaß (3), Gebläse (6,7) mit Ventilatoren (8,9) zur Aufrechterhaltung eines Luftdurchflusses durch den Fahrgastraum, Sensoren (10,20) zum Messen und Stellmittel zum Einstellen des Luftdurchflusses durch den Fahrgastraum und eine mit den Sensoren zusammenwirkende Regelschaltung (11,12) zur Beeinflussung der Stellmittel aufweist, wobei die Stellmittel die Ventilatoren (8,9) der Gebläse (6,7) sind, deren Drehzahl durch die Regelschaltung (11,12) in Abhängigkeit der von den Sensoren (10,20) gelieferten Meßwerte beeinflußbar ist, **dadurch gekennzeichnet,** daß die einzigen Stellmittel die Ventilatoren der Gebläse sind.

2. Einrichtung nach Anspruch 1, **dadurch gekennzeichnet,** daß die Klimaanlage zumindest für den Lufteinlaß (2) ein Gebläse (6) mit einem Ventilator (8) aufweist, dessen Drehzahl über die Regelschaltung (11) einstellbar ist.

3. Einrichtung nach Anspruch 1 oder 2, **dadurch gekennzeichnet,** daß die Klimaanlage für den Luftauslaß (3) ein Gebläse (7) mit einem Ventilator (9) aufweist, dessen Drehzahl durch die Regelschaltung (12) beeinflußbar ist.

4. Einrichtung nach einem der vorhergehenden Ansprüche, **dadurch gekennzeichnet,** daß die Regelschaltung (11,12) einen Folgeregler aufweist, dessen Kennlinie um einen Istwert einen Totzonenbereich und anschließend positiv bzw. negativ verlaufende Kennlinienäste aufweist.

5. Einrichtung nach einem der vorhergehenden Ansprüche, **dadurch gekennzeichnet,** daß die Sensoren (20) kapazitive Druckdifferenzsensoren sind.

**Claims**

1. Device for smoothing out air pressure transients in the passenger compartments (1) of rail vehicles which have an air-conditioning system (6, 7, 8, 9) with a fresh-air inlet (2) and an air outlet (3), ventilation units (6, 7) with fans (8, 9) for maintaining an air flow through the passenger compartment, sensors (10, 20) for measuring and setting means for adjusting the air flow through the passenger compartment and a control circuit (11, 12) interacting with the sensors to influence the setting means, the setting means being the fans (8, 9) of the ventilation units (6, 7) whose rotational speed can be influenced by the control circuit (11, 12) as a function of the measurements supplied by the sensors (10, 20), characterised in that the individual setting means are the fans of the ventilation units.

2. Device according to Claim 1, characterised in that the air-conditioning system has a ventilation unit (6) with a fan (8) at least for the air inlet (2), the rotational speed of the fan being adjustable by means of the control circuit (11).

3. Device according to Claim 1 or 2, characterised in that the air-conditioning system has a ventilation unit (7) with a fan (9) for the air outlet (3), it being possible to influence the rotational speed of the fan by the control circuit (12).

4. Device according to one of the preceding claims, characterised in that the control circuit (11, 12) has a follow-up control unit whose characteristic has a dead zone region around an actual value, from which the characteristic extends negatively or positively.

5. Device according to one of the preceding claims, characterised in that the sensors (20) are capacitive pressure difference sensors.

## Revendications

1. Dispositif destiné à la régulation des coups de pression d'air dans les salle des voyageurs (1) des véhicules ferroviaires, qui comporte une installation de climatisation (6, 7, 8, 9), laquelle possède une prise d'air frais (2) et une sortie d'air (3), des soufflantes (6, 7) avec des ventilateurs (8, 9) destinées à maintenir un certain débit d'air à travers la salle des voyageurs, des capteurs (10, 20) destinés à mesurer le débit de l'air dans la salle des voyageurs et des organes de réglage destinés à ajuster ce débit, et comportant aussi un circuit de régulation (11, 12), qui coopère avec les capteurs, destiné à agir sur l'organe de commande, les organes de commande étant les ventilateurs (8, 9) des soufflantes (6, 7), dont la vitesse de rotation peut être modifiée par le circuit de régulation (11, 12) en fonction des valeurs de mesure fournies par les capteurs (10, 20), caractérisé en ce que le seul organe de commande est représenté par les ventilateurs des soufflantes.

2. Dispositif selon la revendication 1, caractérisé en ce que l'installation de climatisation possède au moins pour la prise d'air (2) une soufflante (6) avec un ventilateur (8) dont la vitesse de rotation peut être réglée par l'intermédiaire du circuit de régulation (11).

3. Dispositif selon la revendication 1 ou 2, caractérisé en ce que l'installation de climatisation destinée à la sortie d'air (3) comporte une soufflante (7) avec un ventilateur (9), dont la vitesse de rotation peut être modifiée par le circuit de régulation (12).

4. Dispositif selon l'une des revendications précédentes, caractérisé en ce que le circuit de régulation (11, 12) comporte un régulateur en cascade dont la caractéristique possède une zone morte autour d'une valeur réelle, suivie de ramifications positives ou négatives.

5. Dispositif selon l'une des revendications précédentes, caractérisé en ce que les capteurs (20) sont des capteurs capacitifs de pression différentielle.

FIG. 1

FIG. 2